# EUROPEAN PATENT SPECIFICATION

(11) **EP 2 961 298 B1**
(45) Date of publication and mention of the grant of the patent: **05.04.2017**
(21) Application number: 14709583.0
(22) Date of filing: 28.02.2014
(51) Int. Cl.: A47J 31/60

(54) **A FILTER AND A TANK FOR A MACHINE FOR THE PREPARATION OF HOT DRINKS**
FILTER UND TANK FÜR EINE MASCHINE ZUR HERSTELLUNG VON HEISSGETRÄNKEN
FILTRE ET RÉSERVOIR POUR MACHINE DE PRÉPARATION DE BOISSONS CHAUDES

(30) Priority: 01.03.2013 IT PD20130051
(43) Date of publication of application: 06.01.2016
(73) Proprietor: Laica S.p.A., 36021 Barbarano Vicentino (VI) (IT)
(72) Inventor: MORETTO, Maurizio, 36100 Vicenza (IT)
(74) Representative: Locas, Davide
(86) International application number: PCT/EP2014/054007
(87) International publication number: WO 2014/131905

(56) References cited:
- US-A1- 2008 264 853
- US-A1- 2009 032 453
- US-B1- 6 383 375

## Description

The object of the invention is a tank for a machine for the preparation of hot drinks of the type comprising a vessel that can be connected to a feed circuit of the machine and which is suitable for removably housing a cartridge filter for the treatment of the water present therein.

In the technical field being referred to, the use of machines to prepare coffee and, in general, hot drinks, provided with a tank intended to contain the water required for preparing the drink, is known. The presence of such a tank is typically required in machines for domestic use to avoid connecting the machine to the water supply system and at the same time ensuring a sufficient quantity of water to obtain an appropriate number of coffees.

For the purposes of improving the quality of the water present in the tank, for example by eliminating the impurities present in it or softening it, the use of replaceable cartridge filtration systems in coffee machines is also known.

Typically, the cartridge filter is removably housed in the tank and the water is made to flow through the filtering material present in the cartridge exploiting, for example, a suction mechanism. In suction systems, the water is therefore drawn towards the boiler of the coffee machine passing through the filter which, for this purpose, is inserted in a watertight manner in an outlet opening of the tank.

In order to be able to fully use the content of the tank, the outlet opening, at which the filter is inserted in a watertight manner, is provided at the bottom of the tank. Still for the same purpose, the filter exhibits both the inlet and outlet arranged close to the bottom of the tank. There is therefore defined inside the filter a path which entirely passes through the filter and places the inlet and outlet in communication via the filtering material. Examples of tanks for coffee machines provided with the abovementioned filtration systems are described in the European patent EP 1 340 442 or in the international patent applications WO 2007/143872 and WO 2008/017492.

The filters described in these documents have a predominantly longitudinal development and are substantially formed by an outer casing in which the filtering material is housed and an inner channelling for the passage of water. The water of the tank is drawn into the filter through an inlet provided at the gap defined between the outer casing and the inner channelling, through the filtering material over the entire length of the filter, until it arrives at a passage of communication with inner channelling, where there is typically provided a mesh filter. The path therefore extends through the inner portion until the outlet of the filter, arranged at the same end as the inlet and connected to the outlet opening of the tank.

As an alternative to such a solution, the international patent application WO 2009/030055 describes a filter in which the inlet and outlet are provided at opposite ends of the casing and an outer channel is provided which lengthens the inlet of the filter up to an area adjacent to the bottom of the tank, therefore allowing the water present in it to nevertheless be completely drawn in.

As an alternative to the abovementioned solution, the patent application WO 2009/030055 also describes a filter provided with a cap cover which covers the filter externally so that a space is defined therebetween, the space being intended to allow the passage of water up to the inlet of the filter.

It is further indicated that the cap cover can be fixed to the filter or to the tank, without any indication relating to the methods of fixing.

These solutions however exhibit drawbacks related mainly to an excessive structural complexity of the cartridge filters which make them particularly expensive and bulky.

This problem is particularly apparent however for the case in which the tank is at least partly of transparent material, a feature often used to provide the user with an immediate comparison with respect to the quantity of water present in the tank. Indeed, in this case the structural complexity and the bulkiness give poor aesthetic features to the filters which are therefore seen as a troublesome element from an aesthetic point of view. One solution to this problem could be represented by the use of aesthetically more appreciable materials, such as for example chromium-plated plastic materials, but the necessity to replace the filter entirely at the end of its useful life means that this solution is not practical from a financial point of view.

Lastly, also from an ecological point of view it would be desirable to use a smaller quantity of plastic in the filter, the latter not being recyclable.

In addition to the previously explained disadvantages, the alternative solution described in WO 2009/030055 and explained previously also does not provide for precisely fixing the cap to the cartridge or to the tank and, consequently, a regular region between these components is not defined thus generating an irregular flow, with the formation of non-homogeneous channelling. The lack of regularity of the flow of water therefore entails a reduced effectiveness of the action of the filter and in general can cause problems of feeding to the machine.

The technical problem underlying the present intention is therefore that of making available a tank for coffee-preparation machines that is structurally and functionally designed to address all the drawbacks complained about with reference to the cited prior art.

This problem is solved by means of a tank for a machine for the preparation of coffee and in general hot drinks, produced in accordance with Claim 1, by the filter according to Claim 13, by the conveyor element according to Claim 15 and by the hot drinks preparation machine according to Claim 17.

Preferred characteristics of the invention are defined in the dependent claims.

The development according to the present invention provides for obtaining optimal aesthetic features, with a simple solution from a structural point of view. Furthermore, it provides for the use of a filter with compact features and shape, which therefore requires a smaller quantity of plastic material compared to the known solutions. Consequently, the quantity of material which is eliminated when replacing the filter can be reduced.

In general, the development according to the present invention turns out to be particularly advantageous from an financial point of view in that it enables consumable components which must be replaced periodically to be reduced.

In addition, a regular flow to the filter and, consequently, to the coffee machine is ensured, and so problems of wrong positioning of the removable components are avoided.

The features and further advantages of the invention will become clear from the following detailed description of one of its preferred but not exclusive example embodiments, illustrated, by way of indication and in a nonlimiting manner, with reference to the appended drawings in which:
- Figure 1 is a perspective view, in cross-section, of a tank for a machine for the preparation of hot drinks according to the present invention;
- Figure 2 is a perspective view, in cross-section, of a second embodiment of the tank for a machine for the preparation of hot drinks according to the present invention;
- Figure 3 is a perspective view, in cross-section, of a third embodiment of the tank for a machine for the preparation of hot drinks according to the present invention;
- Figure 4 is a perspective view, in cross-section, of a fourth embodiment of the tank for a machine for the preparation of hot drinks according to the present invention;
- Figures 5 and 5A are, respectively, a perspective view, in cross-section, of a fifth embodiment of the tank for a machine for the preparation of hot drinks according to the present invention; and
- Figures 6 and 6A are, respectively, a perspective view, in cross-section, of a sixth embodiment of the tank for a machine for the preparation of hot drinks according to the present invention and a perspective view of a cartridge filter that can be removably housed in the tank.

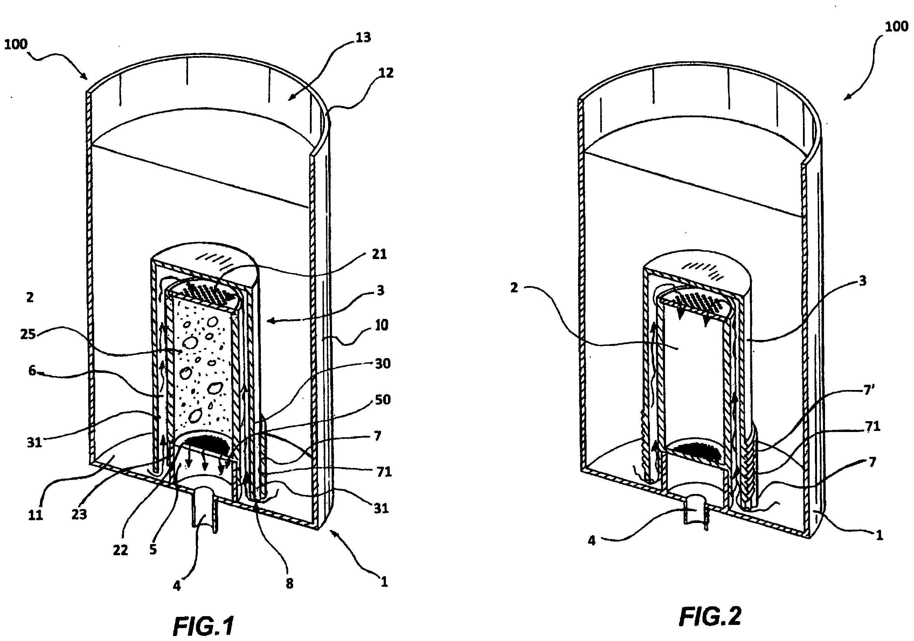

With reference initially to Figure 1, a tank for machines for the preparation of hot drinks, for example coffee, tea or barley coffee, is indicated as a whole with the reference number 100.

The tank 100 comprises a vessel 1 intended to contain water to be used for preparing the drink.

According to a preferred embodiment, the vessel 1 is made of transparent material, for example plastic. More generally, the vessel 1 advantageously includes at least one portion of one of its perimeter walls 10 that is transparent, so as to easily allow the user to be able to observe the level of liquid present inside it.

By way of example, the vessel 1 can be formed by a cylindrical structure, defining its perimeter wall, at the upper portion 12 of which there is defined an inlet mouth 13 for pouring the water into the vessel. It is nevertheless obvious that alternative shapes for the vessel may also be provided.

Still with reference to Figure 1, the connection of the tank 1 to the coffee machine, in particular to the circuit for feeding water into it, is obtained by means of a connecting element 4, provided at a bottom wall 11 of the vessel 1. By way of example, the connecting element 4 can be provided in the form of a nozzle which is inserted into a corresponding seat, not illustrated in the drawing, provided in the machine and connected to the circuit of the latter.

At the connecting element 4, there are also provided housing means 5 for removably housing a cartridge filter 2 which in the present embodiment are implemented by means of a circular ring shaped entrance on which a corresponding attachment portion 23 of the filter is bound in a watertight manner. In the present embodiment, the connection between the vessel 1 and the cartridge can take place by means of an interference coupling, if necessary providing a watertight element between the attachment portion 23 and the housing means 5. More generally, the housing means 5 comprise a seat 50 in which the filter 2 is inserted in a watertight manner at one of its outlet portions 22. Furthermore, the coupling between filter 2 and seat 50 can take place using systems that are different from a connection by interference.

The filter 2 has a substantially longitudinal development and comprises an outer casing 20, for example of cylindrical shape, inside which is housed the filtering material 25, such as for example ion-exchange resins. The attachment portion 23 is provided at one end of the filter 2, in such a way that when fixed to the vessel 1, it exhibits a substantially vertical development. It is noted that, as will be better illustrated below, the filter according to the present invention can be implemented with a particularly simple structure, thus contributing to hold down its production costs.

The filter 2 further comprises an inlet section 21, arranged at an opposite end with respect to the outlet portion 22. The sections 21 and 22 are for example formed by a mesh filter which holds back the filtering material 25 inside it, while at the same time allowing water to enter and leave. As can be observed from Figure 1, the outlet section 22 is arranged facing the connecting element 4, such that the water that enters from the inlet section 21 reaches the coffee machine circuit through the outlet section after having passed through the filtering material 25.

The tank 100 according to the present invention further comprises a conveyor element 3, removably fixed to the vessel 1 and which covers the filter substantially over its entire length, so positioned that a passage 8 for the water is defined between the bottom 11 of the tank and a base portion 34 of the conveyor element 3. In the present embodiment, the conveyor element 3 also exhibits a cylindrical shape, with a slightly greater diameter than that of the filter 2, and is provided with a notch of substantially semicircular shape at its base portion 31, such that, when it is stood on the bottom 11 of the tank 1, the passage 8 nevertheless remains defined. It is nevertheless obvious that the passage 8 can also be implemented by means of alternative embodiments, for example by providing for the conveyor element to remain slightly spaced away from the bottom 11.

As can be observed from Figure 1, when the conveyor element 3 is fixed to the vessel 1, this is arranged coaxially with respect to the filter 2 and, by virtue of the difference between the diameters of the same or, more generally, of their dimensions, a feed channel 6 remains defined between the cover 3 and the cartridge filter 2 which connects the passage 8 and the inlet section 21 of the filter 2, so as to enable the flow of water contained in the vessel 1 towards the filter 2. The feed channel 6 therefore exhibits, similarly to the filter 2, a substantially vertical development.

In order to correctly fix the conveyor element 3 to the vessel, the tank 1 further comprises positioning means for the conveyor element 3, which provide for guiding and removably fixing the conveyor element 3, advantageously ensuring that the feed channel 6 remains precisely defined.

This feature therefore ensures a regular flow of water into the path 6 and, consequently, into the filter 2 and into the feed circuit of the machine. For this reason, in the following it will be made reference to the positioning means also as means for guiding and removably fixing the conveyor element 3.

According to a preferred embodiment, the positioning means comprise a housing defined by two or more housing parts 7, arranged in a ring, thus forming respective ring portions, between which parts there remains defined a space at which the passage 8 opens. The housing defined by the ring portions 7 exhibits such a shape and dimensions as to accommodate the base portion 31 of the conveyor element 3 by means of a shape coupling. This coupling can advantageously exhibit a slight interference so as to enable a sufficiently stable fixing of the conveyor element 3, allowing it nevertheless to be removed easily.

When the conveyor element 3 is inserted in the housing 7 which defines the positioning means, as a result of a drawing action by the connecting element 4, the water is drawn into the conveyor element 3 through the passage 8, which represents the only passage towards the filter 2.

To guide the insertion of the conveyor element 3 in the housing and therefore ensure its correct positioning, the ring portions, or more generally the fixing and guide means, comprise a guide surface 71 suitable for matching up with a lateral surface 30 of the conveyor element 3. In the present embodiment these surfaces 71 have the shape of cylindrical surface portions, which slide one over the other thus correctly positioning the conveyor element 3.

Figures 2 to 6 illustrate alternative embodiments of the fixing and guide means.

In the embodiment of Figure 2, the positioning means comprise a threaded portion 7', provided at the parts 7 and at which the conveyor element 3 can be scred so as to be fixed to the tank.

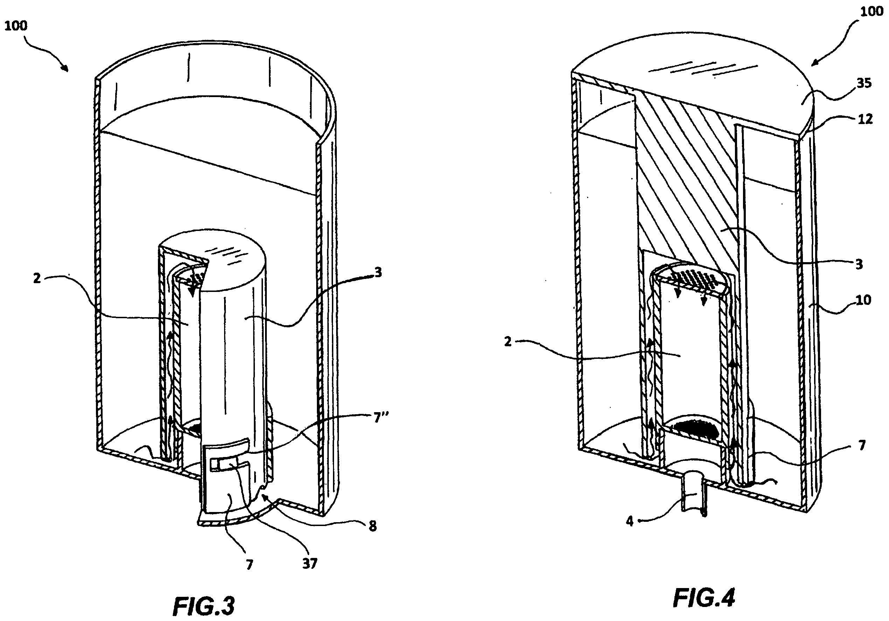

With reference therefore to Figure 3, the positioning means can comprise a bayonet coupling 7". In this case, the parts 7 comprise a guide into which a slider 37 provided in the conveyor element is inserted.

According to yet another variant embodiment, illustrated in Figure 4, the conveyor element 3 is extended vertically up to the inlet mouth 13 of the vessel 1 and comprises a closure lid 35 suitable for closing the inlet mouth 13 when the conveyor element 3 is fixed to the vessel 1. In this way, the operation to remove the conveyor element 3, which can be more easily grasped without needing to insert one's hands into the vessel 1, can be facilitated.

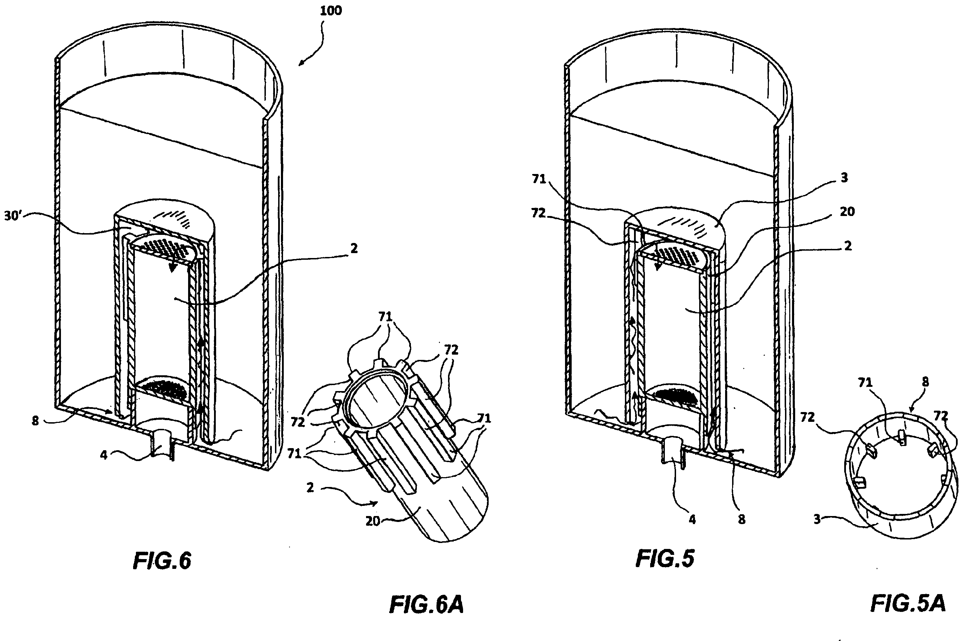

According to a further embodiment, illustrated in Figures 5 and 5A, the fixing and guide means comprise a plurality of ribs 72 provided on an inner lateral surface of the conveyor element 3 arranged to face, in use, the filter 2. Preferably, the ribs 72 exhibit a longitudinal development and are oriented vertically, and comprise the guide surface 71 which, in this case, matches up with a lateral surface 20 of the filter 2. When the conveyor element 3 is fixed to the vessel 1 by means of the filter 2, the path 6 for the passage of water therefore remains defined between the ribs 72.

As an alternative, the ribs 72 can be provided on the lateral surface 20 of the filter 2 so arranged to face, in use, the inner lateral surface of the conveyor element 3, as illustrated in Figures 6 and 6A. Here, the guide surfaces 71 match up with the conveyor element 3 on one of its inner lateral walls 30', therefore enabling the fixing and correct positioning of the conveyor element 3 in a conceptually similar manner to that described with reference to the preceding embodiments.

The invention thus solves the stated problem, attaining a plurality of advantages at the same time. The conveyor element 3 can advantageously be formed by a component of high aesthetic qualities, even using materials that are not necessarily inexpensive, since it does not have to be replaced at the end of the useful life of the cartridge filter 2. This feature provides for using a vessel that is at least partly transparent, without diminishing the aesthetic qualities of the tank as a whole.

The possibility of reusing the conveyor element however ensures that the quantity of material used in the cartridge filter is minimised, with a consequential saving of costs and a reduced environmental impact.

In addition, the fixing and guide means provide for obtaining a precise positioning of the conveyor element 3, therefore obtaining a homogeneous path for the water into the filter and consequently ensuring optimal operation of the machine which uses the filter according to the present invention.

Furthermore, the present invention can use filters that are particularly simple from a structural point of view, not requiring, unlike in the prior art, complex integrated channelling systems.

## Claims

1. A tank (100) for a machine for the production of hot drinks comprising:
- a vessel (1) suitable for containing water to be supplied to the machine for the production of hot drinks;
- a connecting element (4) which connects the vessel (1) to a feed circuit of the machine for the production of hot drinks;
- housing means (5) for removably housing a cartridge filter (2); **characterised in that** it comprises positioning means (7; 7'; 7"; 72) for removably fixing a conveyor element (3) to the vessel (1), the conveyor element (3) being suitable for covering the filter (2) at an inlet section (21) for the water to enter the filter (2), leaving a passage (8) for the water defined between the vessel (1) and the conveyor element (3), a feed channel (6) being further defined between the conveyor element (3) and the filter (2) so as to allow a flow of water from the vessel (1) towards the inlet section (21).

2. The tank (100) according to Claim 1, wherein the positioning means (7; 7'; 7"; 72) comprise a guide surface (71) suitable for matching up with a lateral surface (30; 20) of the conveyor element (3) or of the filter (2) when the conveyor element (3) is fixed to the vessel (1).

3. The tank (100) according to either Claim 1 or Claim 2, wherein the housing means (5) of the cartridge filter (2) are provided at the bottom (11) of the vessel (1).

4. A tank (100) according to Claim 3, wherein a passage (8) for the water is defined between the bottom (11) of the vessel (1) and a base portion (31) of the cover.

5. A tank (100) according to Claim 4, wherein the positioning means comprise a housing (7) suitable for accommodating the base portion (31) of the cover by means of a shape coupling.

6. A tank (100) according to Claim 4, wherein the positioning means comprise a threaded portion (7').

7. A tank (100) according to Claim 4, wherein the positioning means comprise a bayonet coupling (7").

8. A tank (100) according to one of Claims 1 to 4, wherein the cover (3) is removably fixed to the cartridge filter (2).

9. A tank (100) according to one of the preceding claims, wherein the cover (3) is arranged resting on the perimeter wall (10) of the vessel (1) at a top portion (12) of the wall (10).

10. A tank (100) according to one of the preceding claims, wherein the housing means (5) comprise a seat (50) in which the filter (2) is inserted in a watertight manner at an outlet portion (22).

11. A conveyor element (3) comprising positioning means (7) which comprise a guide surface (71) suitable for matching up with a lateral surface (20) of a cartridge filter (2) which can be housed in a tank according to one of Claims 1 to 10.

12. A conveyor element (3) according to Claim 11, wherein the fixing and guide means (7) comprise a plurality of ribs (72) produced at an inner lateral surface of the conveyor element (3).

13. A cartridge filter (2) for a tank (100) for a machine for the preparation of hot drinks according to claims, 11, 12 comprising means for removably fixing the conveyor element (3) according to one of the preceding claims.

14. A cartridge filter (2) according to Claim 11, further comprising a plurality of ribs (72), on which ribs there is defined a guide surface (71) suitable for matching up with an inner lateral surface of the conveyor element (3).

15. A machine for the preparation of hot drinks, comprising a tank (100) according to one of Claims 1 to 10.

## Patentansprüche

1. Tank (100) für eine Maschine zur Herstellung von Heißgetränken, umfassend:
- einen Behälter (1), welcher geeignet ist, um Wasser aufzunehmen, welches der Maschine zur Herstellung von Heißgetränken zugeführt wird;
- ein Verbindungselement (4), welches den Behälter (1) mit einem Zuführungskreislauf der Maschine zur Herstellung von Heißgetränken verbindet;
- Aufnahmemittel (5), um eine Filterkartusche (2) herausnehmbar aufzunehmen;
**dadurch gekennzeichnet, dass** der Tank Positionierungsmittel (7; 7'; 7"; 72) umfasst, um ein Förderelement (3) lösbar an dem Behälter (1) zu befestigen, wobei das Förderelement (3) geeignet ist, den Filter (2) an einem Einlassabschnitt (21) für das Wasser zum Eintreten in den Filter (2) zu bedecken, wobei ein Durchlass (8) für das Wasser, welcher zwischen dem Behälter (1) und dem Förderelement (3) definiert ist, verbleibt, wobei weiterhin ein Zuführungskanal (6) zwischen dem Förderelement (3) und dem Filter (2) definiert ist, so dass ein Strömen des Wassers vom Behälter (1) zum Einlassabschnitt (21) ermöglicht ist.

2. Tank (100) nach Anspruch 1, wobei die Positionierungsmittel (7; 7'; 7"; 72) eine Führungsfläche (71) umfassen, welche geeignet ist, um mit einer Seitenfläche (30; 20) des Förderelements (3) oder des Filters (2) zusammenzupassen, wenn das Förderelement (3) an dem Behälter (1) befestigt wird.

3. Tank (100) nach Anspruch 1 oder Anspruch 2, wobei die Aufnahmemittel (5) der Filterkartusche (2) am Boden (11) des Behälters (1) bereitgestellt sind.

4. Tank (100) nach Anspruch 3, wobei ein Durchlass (8) für das Wasser zwischen dem Boden (11) des Behälters (1) und einem Basisabschnitt (31) der Abdeckung definiert ist.

5. Tank (100) nach Anspruch 4, wobei die Positionierungsmittel ein Gehäuse (7) umfassen, welches geeignet ist, um den Basisabschnitt (31) der Abdeckung formschlüssig aufzunehmen.

6. Tank (100) nach Anspruch 4, wobei die Positionierungsmittel einen Gewindeabschnitt (7') umfassen.

7. Tank (100) nach Anspruch 4, wobei die Positionierungsmittel einen Bajonettverschluss (7") umfassen.

8. Tank (100) nach einem der Ansprüche 1 bis 4, wobei die Abdeckung (3) abnehmbar an der Filterkartusche (2) befestigt ist.

9. Tank (100) nach einem der vorangehenden Ansprüche, wobei die Abdeckung (3) auf der Umfangswandung (10) des Behälters (1) aufliegend an einem oberen Abschnitt (12) der Wandung (10) angeordnet ist.

10. Tank (100) nach einem dem vorangehenden Ansprüche, wobei die Aufnahmemittel (5) eine Aufnahme (50) umfassen, in welche der Filter (2) wasserdicht an einem Auslassabschnitt (22) eingesetzt ist.

11. Förderelement (3), umfassend Positionierungsmittel (7), welche eine Führungsfläche (71) umfassen, welche geeignet ist, um mit einer Seitenfläche (20) einer Filterkartusche (2), welche in einem Tank gemäß einem der Ansprüche 1 bis 10 aufgenommen werden kann, zusammenzupassen.

12. Förderelement (3) nach Anspruch 11, wobei die Befestigungs- und Führungsmittel (7) eine Vielzahl von Rippen (72) umfassen, welche an einer Innenseitenfläche des Förderelements (3) ausgebildet sind.

13. Filterkartusche (2) für einen Tank (100) für eine Maschine zur Bereitstellung von Heißgetränken nach Anspruch 11 und 12, umfassend Mittel zum lösbaren Befestigen des Förderelements (3) gemäß einem der vorangehenden Ansprüche.

14. Filterkartusche (2) nach Anspruch 11, ferner umfassend eine Vielzahl von Rippen (72), wobei auf den Rippen eine Führungsfläche (71) definiert ist, welche geeignet ist, um mit einer Innenseitenfläche des Förderelements (3) zusammenzupassen.

15. Maschine zur Bereitstellung von Heißgetränken, umfassend einen Tank (100) gemäß einem der Ansprüche 1 bis 10.

## Revendications

1. Réservoir (100) pour une machine de production de boissons chaudes comprenant :
un récipient (1) approprié pour contenir de l'eau à amener à la machine de production de boissons chaudes ;
un élément de raccordement (4) qui raccorde le récipient (1) à un circuit d'alimentation de la machine de production de boissons chaudes ;
des moyens de logement (5) pour loger de manière amovible un filtre à cartouche (2) ;
**caractérisé en ce qu'**il comprend des moyens de positionnement (7 ; 7' ; 7" ; 72) pour fixer de manière amovible un élément transporteur (3) au récipient (1), l'élément transporteur (3) pouvant être approprié pour recouvrir le filtre (2) au niveau d'une section d'entrée (21) pour que l'eau pénètre dans le filtre (2), laissant un passage (8) pour l'eau, défini entre le récipient (1) et l'élément transporteur (3), un canal d'alimentation (6) étant en outre défini entre l'élément transporteur (3) et le filtre (2) pour permettre un écoulement d'eau du récipient (1) vers la section d'entrée (21).

2. Réservoir (100) selon la revendication 1, dans lequel les moyens de positionnement (7 ; 7' ; 7" ; 72) comprennent une surface de guidage (71) appropriée pour correspondre à une surface latérale (30 ; 20) de l'élément transporteur (3) ou du filtre (2) lorsque l'élément transporteur (3) est fixé sur le récipient (1).

3. Réservoir (100) selon la revendication 1 ou la revendication 2, dans lequel les moyens de logement (5) du filtre à cartouche (2) sont prévus au fond (11) du récipient (1).

4. Réservoir (100) selon la revendication 3, dans lequel un passage (8) pour l'eau est défini entre le fond (11) du récipient (1) et une partie de base (31) du couvercle.

5. Réservoir (100) selon la revendication 4, dans lequel les moyens de positionnement comprennent un boîtier (7) approprié pour loger la partie de base (31) du couvercle au moyen d'un couplage de forme.

6. Réservoir (100) selon la revendication 4, dans lequel les moyens de positionnement comprennent une partie filetée (7').

7. Réservoir (100) selon la revendication 4, dans lequel les moyens de positionnement comprennent un couplage à baïonnette (7").

8. Réservoir (100) selon l'une des revendications 1 à 4, dans lequel le couvercle (3) est fixé de manière amovible au filtre à cartouche (2).

9. Réservoir (100) selon l'une des revendications précédentes, dans lequel le couvercle (3) repose sur la paroi périmétrale (10) du récipient (1) au niveau d'une partie supérieure (12) de la paroi (10).

10. Réservoir (100) selon l'une des revendications précédentes, dans lequel les moyens de logement (5) comprennent un siège (50) dans lequel le filtre (2) est inséré d'une manière étanche à l'eau au niveau d'une partie de sortie (22).

11. Elément de transporteur (3) comprenant des moyens de positionnement (7) qui comprennent une surface de guidage (71) appropriée pour correspondre à la surface latérale (20) d'un filtre à cartouche (2) qui peut être logé dans un réservoir selon l'une des revendications 1 à 10.

12. Elément de transporteur (3) selon la revendication 11, dans lequel les moyens de fixation et de guidage (7) comprennent une pluralité de nervures (72) produites au niveau d'une surface latérale interne de l'élément transporteur (3).

13. Filtre à cartouche (2) pour un réservoir (100) pour une machine de préparation de boissons chaudes selon les revendications 11, 12, comprenant des moyens pour fixer de manière amovible l'élément transporteur (3) selon l'une des revendications précédentes.

14. Filtre à cartouche (2) selon la revendication 11, comprenant en outre une pluralité de nervures (72), sur lesquelles nervures, on définit une surface de guidage (71) appropriée pour correspondre à une surface latérale interne de l'élément transporteur (3).

15. Machine de préparation de boissons chaudes, comprenant un réservoir (100) selon l'une des revendications 1 à 10.
